# EUROPÄISCHE PATENTSCHRIFT

(11) **EP 1 209 013 B1**
(45) Veröffentlichungstag und Bekanntmachung des Hinweises auf die Patenterteilung: **25.05.2005**
(21) Anmeldenummer: 01127177.2
(22) Anmeldetag: 16.11.2001
(51) Int. Cl.: B60J 1/20

(54) **Fensterscheibe mit daran befestigtem Fensterrollo**
Window pane with attached roller blind
Vitre avec store à enrouleur attaché

(30) Priorität: 22.11.2000 DE 10057759
(43) Veröffentlichungstag der Anmeldung: 29.05.2002
(73) Patentinhaber: BOS GmbH & Co. KG, 73760 Ostfildern (DE)
(72) Erfinder: Schlecht, Werner P., 71665 Vaihingen/Enz (DE); Walter, Herbert, 73061 Ebersbach (DE)
(74) Vertreter: Patentanwälte Rüger, Barthelt & Abel

(56) Entgegenhaltungen:
- EP-A- 0 834 414
- DE-A- 3 413 966
- DE-A- 3 415 930

## Beschreibung

Moderne Karosserieformen zeichnen sich durch verhältnismäßig große Fensterflächen aus. Die großen Fensterflächen führen wegen der starken Sonneneinstrahlung zu einer erheblichen Aufheizung des Fahrzeuginneren, und bei Fahrzeugen mit Klimaanlagen bedeutet die starke Aufheizung einen nicht unbeträchtlichen Energieverbrauch, um der Fahrzeugaufheizung entgegenzuwirken.

Die Kraftfahrzeuge werden deswegen in zunehmendem Maße mit Fensterrollos ausgerüstet.

Hierzu ist es aus der gattungsgemäßen EP 0 834 414 A2 bekannt, an der Innenseite der Heckfensterscheibe zwei Führungsschienen aufzukleben, in denen der Zugstab der Rollobahn endseitig geführt ist.

Längs der Oberkante der Fensterscheibe verläuft ein Gehäuse, in dem eine Wickelwelle drehbar gelagert ist. Das Gehäuse ist ebenfalls an der Scheibe angeklebt. Die Wickelwelle ist mit einer Einrichtung versehen um sie im Sinne des Aufwickelns der Rollobahn, die an der Wickelwelle mit einer Kante befestigt ist, in Umdrehungen zu versetzen.

Bei der bekannten Anordnung wird die Zugstange von Hand betätigt.

Es ist aber auch beispielsweise aus der DE 34 15 930 A1 bekannt, die Wickelwelle mit Hilfe einer Schraubenfeder im Aufwickelsinne der Rollobahn vorzuspannen. Das Abwickeln bzw. Aufspannen der Rollobahn geschieht mit Hilfe von flexiblen Zahnstangen, die über einen Getriebemotor angetrieben sind und in den Führungsschienen knicksteif geführt sind.

Ausgehend hiervon ist Aufgabe der Erfindung, die Montage der Hutablage wesentlich zu vereinfachen.

Diese Aufgabe wird erfindungsgemäß durch die Fensteranordnung mit den Merkmalen des Anspruches 1 gelöst.

Eine besonders robuste Verbindung wird erhalten, wenn die Führungsschienen nahezu über die gesamte Länge mit der Fensterscheibe verklebt werden. Der nichtverklebte Abschnitt ist gegebenenfalls ein unmittelbar an die Wickelwelle angrenzender Einlaufabschnitt.

Eine Vereinfachung wird erzielt, indem zumindest die Wickelwelle mit allen zugehörigen Teilen bereits seitens des Herstellers des Fensterrollos mit der betreffenden Fensterscheibe verklebt wird. Einbauseitig muss dann am Band nur noch die Scheibe eingeklebt und die Verbindung zu den Führungsschienen hergestellt werden. Dies läßt sich weiter vereinfachen, wenn an der Fensterscheibe kurze Führungsschienenstücke bereits befestigt sind, in die zuvor schon der Zugstab endseitig eingefädelt wurde. Am Band können diese Führungsschienenstücke dann unproblematisch an die vollständigen Führungsschienen angefügt werden.

Bei stark gewölbten Scheiben ist es von Vorteil, dass an der Innenseite der Fensterscheibe eine Konsole angeklebt ist, die eine von der Innenseite wegweisende gerade Kante bildet. Die Oberseite der Konsole bildet im montierten Zustand einen Abschnitt der Hutablage, während die Kante der Konsole gleichzeitig eine Kante des Auslaufschlitzes für das Rollo darstellt.

Zur Lagerung der Wickelwelle wird die Konsole verwendet werden, die gleichzeitig auch dazu dienen kann, den Antriebsmotor zu halten.

Die Führungsschienen sind bevorzugt über die gesamte Länge mit der betreffenden Fensterscheibe stoffschlüssig verbunden.

Die Führungsnuten, in denen der Zugstab läuft, sind bevorzugt hinterschnittene Nuten, so dass sie in der Lage sind gleichezeitig als Führungsrohre für Antriebsglieder zu dienen. Im Falle von Schubgliedern sind sie in der Lage die Schubglieder ausknicksicher zu halten.

Die Antriebseinrichtung für das Fensterrollo der Fensteranordnung wird sehr einfach, wenn ein Federmotor vorgesehen ist, mit dem die Wickelwelle im Aufwickelsinne der Rollobahn vorgespannt ist. Ein Elektromotor kann in diesem Fall zum Antrieb des Zugstabs dienen. Der Elektromotor gibt die Ausfahrstellung des Fensterrollos vor, während die Wickelwelle entsprechend folgt.

Die Antriebsglieder sind im einfachsten Falle, linienförmige Schubglieder, weil sich diese ohne weiteres unterhalb der Hutablage unterbringen lassen, so dass keine Antriebsglieder oder Antriebe am anderen Ende des Fensterrollos das von der Wickelwelle abliegt untergebracht werden müssen.

Die Rollobahn besteht aus einem Gewirk oder einer gelochten, mehr oder weniger dunkel eingefärbten Folie.

Im übrigen sind Weiterbildungen der Erfindung Gegenstand von Unteransprüchen. Dabei sollen auch solche Merkmalskombinationen als beansprucht gelten, für die es kein explizites Ausführungsbeispiel gibt.

In der Zeichnung sind Ausführungsbeispiele des Gegenstandes der Erfindung dargestellt. Es zeigen:
- Fig. 1: einen Pkw in einer Rückansicht, unter Veranschaulichung eines erfindungsgemäßen ausgezogenen Heckscheibenrollos,
- Fig. 2: den prinzipiellen Aufbau des Heckscheibenrollos nach Fig. 1, in einer Draufsicht,
- Fig. 3: die erfindungsgemäße Fensteranordnung nach Fig, 1, ausschnittsweise in einem Querschnitt parallel zu der Zugstange,
- Fig. 4: ein weiteres Ausführungsbeispiel der erfindungsgemäßen Fensteranordnung, in einer schematisierten vereinfachten Querschnittsdarstellung nahe dem Wickelwellenende, und
- Fig. 5: das Ausführungsbeispiel nach Fig. 4 in einer ähnlichen Darstellung jedoch in einem Schnitt in der Nähe der Mitte der Wickelwelle.

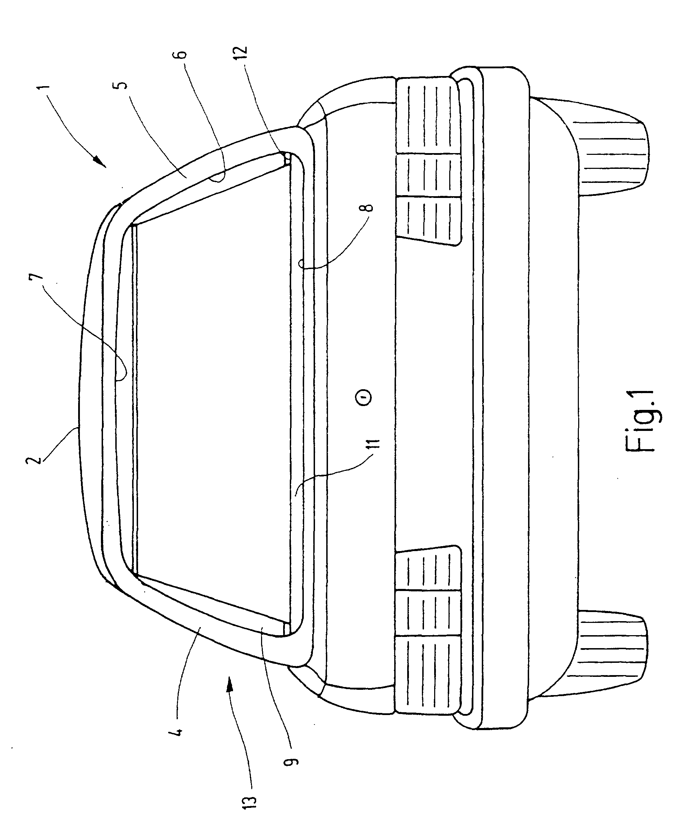

Fig. 1 zeigt in einer schematischen Darstellung die Rückansicht eines Pkw 1 mit einem Dach 2, einem Kofferraum 3 sowie zwei C-Säulen 4 und 5. Zwischen den beiden C-Säulen 4 und 5 befindet sich eine Heckfensteröffnung 6, die nach oben von einer Dachhinterkante 7 und nach unten von einer Fensterbrüstung 8 grenzen. In der Heckfensteröffnung 6 sitzt in bekannter Weise, beispielsweise mittels Fenstergummi eingeklebt, eine Heckscheibe 9.

Im Inneren des Pkw 1 befindet sich vor der Innenseite der Heckscheibe 9 eine Hutablage 11, die sich zwischen der Fensterunterkante 8 und einer in der Figur nicht erkennbaren Rücksitzlehne horizontal erstreckt. In der Hutablage 11 verläuft ein gerader Auslaufschlitz 12.

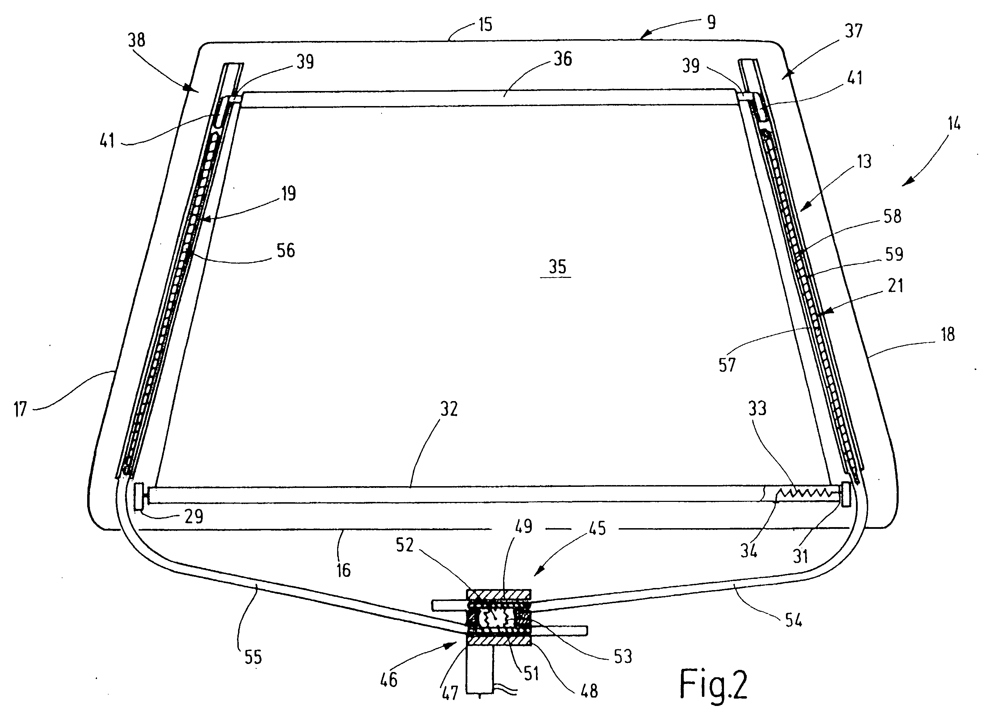

Der Auslaufschlitz 12 gehört zu einem Heckfensterrollo 13, dessen prinzipieller Aufbau in Fig. 2 stark schematisiert in einer Draufsicht veranschaulicht ist.

Fig. 2 zeigt eine Fensteranordnung 14 bestehend aus der Heckscheibe 9 und dem daran befestigten Heckfensterrollo 13.

Die Heckscheibe 9 wird von zwei im wesentlichen zueinander parallelen Scheibenkanten 15 und 16 sowie zwei zueinander konvergierenden seitlichen scheibenkanten 17 und 18 begrenzt. Die Konturen der Scheibenkanten 15...18 sind an die Konturen der Heckfensteröffnung 6 angepasst.

Auf der zum Fahrzeuginneren zeigenden Seite der Heckscheibe 9 ist das Heckfensterrollo 13 zumindest teilweise befestigt.

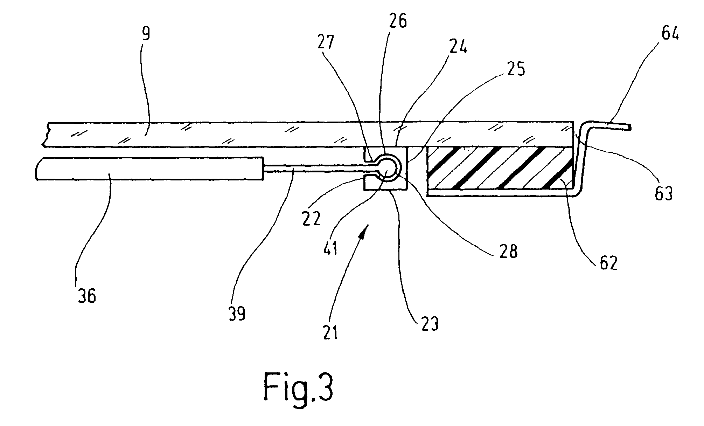

Das Heckfensterrollo 13 weist zwei Führungsschienen 19 und 21 auf, die neben den seitlichen Rändern 17 und 18 der Heckscheibe 9 und dem Abstand zu diesen Rändern 17, 18 verlaufen. Die Führungsschienen 19 und 21 sind in Figur 2 aufgeschnitten gezeigt. Sie haben im einzelnen das aus Figur 3 ersichtliche Querschnittsprofil.

Der Querschnitt ist im wesentlichen quadratisch und wird von wie einer Vorderseite 22, zwei Seitenwänden 23, 24 und einer Rückseite 25 begrenzt. Von der Vorderseite 22 führt in das Innere der Führungsschiene 21 eine hinterschnittene Führungsnut 26, die sich mit konstantem Querschnitt über die Länge der Führungsschiene 21 fortsetzt. Wie aus Figur 3 zuerkennen ist, setzt sich das Nutenprofil aus einem in Richtung auf die Vorderseite 22 offenen Schlitz 27 und einem kreisförmigen Abschnitt 28 zusammen. Mit der Seitenfläche 24 ist die Führungsschiene 21 über die gesamte Länge mit der Heckscheibe 9 verklebt.

Die Führungsschiene 19 hat dasselbe Querschnittsprofil und ist zu der Führungsschiene 21 spiegelbildlich auf das Heckfenster 9 aufgeklebt. Die Führungsschlitze 27 öffnen sich in Richtung aufeinander zu.

In der Nähe der unteren Scheibenkante 16 sind ebenfalls im Abstand zu der Scheibenkante 16 zwei Lagerböcke 29 und 31 aufgeklebt, zwischen denen eine Wickelwelle 32 drehbar gelagert ist. Die Wickelwelle 32 ist rohrförmig und enthält, wie dies im aufgebrochenen Teil rechts zu erkennen ist, einen Federmotor 33 in Gestalt einer Schraubenfeder. Die Schraubenfeder ist einends bei 34 im Inneren des Wickelwellenrohres befestigt und anderenends an dem Lagerbock 31 festgelegt.

An der Wickelwelle 32 ist mit einer Kante eine Rollobahn 35 verankert, deren andere zu der Wickelwelle 32 parallele Kante 36 zu einer schlauchförmigen Schlaufe umgeschlagen ist. In der Schlaufe 36 steckt ein Zugstab von dem lediglich seitlich überstehende End- oder Führungsstücke 37 und 38 zu erkennen sind. Die Führungsstücke 37, 38 sind zueinander spiegelsymmetrisch und stecken in einem in der Schlaufe 36 enthaltenen Profilrohr. Das Führungsstück 38 hat L-förmige Gestalt und setzt sich aus einem länglichen Arm 39 und einem Führungsglied 41 zusammen. Der Querschnitt des Armes 39 ist so gewählt, dass er durch den Schlitz 27 der Führungsnut 26 hindurch passt. Hingegen ist das Führungsglied 41 an den Querschnitt des kreisförmigen Teils 28 der Führungsnut 26 angepasst, wie dies auf Figur 3 in der Draufsicht erkennen läßt.

Da wie gesagt, das Führungsstück 37 den spiegelbildlichen Aufbau hat, erübrigt sich eine erneute Beschreibung. Es genügt, die entsprechenden Teile mit den Bezugszeichen zu versehen, wie sie im Zusammenhang mit dem Führungsstück 38 verwendet sind.

Um die Rollobahn 35 auszufahren ist eine weitere Antriebseinrichtung 45 vorgesehen, die in Figur 2 stark schematisiert gezeigt ist.

Zu der Antriebseinrichtung 45 gehört ein Getriebemotor 46, der sich aus einem permanent erregten Gleichstrommotor 47 und einem Getriebegehäuse 48 zusammensetzt. In dem Getriebegehäuse sind parallel zueinander zwei Führungskanäle 49 und 51 enthalten, zwischen denen auf einer Ausgangswelle 52 ein Ausgangszahnrad 53 vorgesehen ist. Das Ausgangszahnrad 53 kann über die damit drehfest verbundene Ausgangswelle 52 wahlweise in beiden Drehrichtungen in Gang gesetzt werden.

Von dem Führungskanal 49 geht ein Führungsrohr 54 zu dem unteren Ende der Führungsschiene 21 und fluchtet dort mit dem kreisförmigen Profilabschnitt 28 der Führungsnut 26.

Ein weiteres Führungsrohr 55 verbindet das linke Ende des Führungskanals 51 mit dem unteren Ende der Führungsschiene 19 in sinngemäß der gleichen Weise.

Sowohl durch den Führungskanal 49 als auch durch den Führungskanal 51 verläuft jeweils ein biegeelastisches Schubglied 56 bzw. 57. Der jeweils nicht benutzte Teil der Schubglieder 56, 57 wird in abgebrochen veranschaulichte Speicherohre zurückgeschoben, die von dem jeweils anderen Ende der Führungskanäle 49, 51 ausgehen.

Die beiden Schubglieder 56, 57 haben denselben Aufbau. Sie bestehen jeweils aus einer elastischen, biegsamen Seele 58, die auf ihrer Außenseite eine oder mehrere Rippen 59 trägt. Die Rippen 59 bilden auf der Außenseite ein einoder mehrgängiges Gewinde. Die Rippen 59 stehen radial vor und laufen schraubenförmig über die zylindrische Seele 58 von einem Ende des Schubglieds bis zum anderen Ende. Das Ausgangszahnrad 53 trägt eine Verzahnung, die zwischen die von den Rippen 59 gebildete Nuten 51 eingreifen kann. Auf diese Weise ist das Ausgangszahnrad 53 formschlüssig mit den Schubgliedern 56 und 57 gekoppelt.

Die Montage der beschriebenen Fensteranordnung 14 geschieht wie folgt:

Auf die bereitgestellt Heckscheibe 9 werden auf deren Innenseite mit Hilfe von Schablonen, die beiden Führungsschienen 19 und 21 lagerichtig aufgeklebt. Anschließend werden die Lagerböcke 29 und 31 ebenfalls aufgeklebt, und es wird zwischen den Lagerböcken 29 und 31 die Wickelwelle 32 eingebaut, auf der zuvor die Rollobahn 35 aufgewickelt wurde.

Die Rollobahn 35 ist vorkonfektioniert und hat den trapezförmigen Zuschnitt sowie die endseitige Schlaufe 36.

In der Schlaufe steckt der Zugstab, dessen beide Führungsstücke 37, 38 seitlich vorstehen.

Nunmehr kann die Rollobahn von der Wickelwelle 32 abgezogen werden, und es werden die Führungsglieder 41 am oberen Ende der Führungsschienen 19, 21 in die Führungsnuten 26 eingefädelt. Der Federmotor 33 setzt nach dem Loslassen der betreffenden Kante die Wickelwelle 32 im Sinne des Aufwickeins in Gang.

Am Ende der Montage liegt der Zugstab mit den Führungsstücken 37 und 38 an den Lagerböcken 29 und 31 an, ohne dass die Führungsglieder 41 aus den Führungsschienen 19 und 21 freikommen können.

Die Fensteranordnung 14 ist damit herstellerseits vorgefertigt und kann an das Montageband geliefert werden.

Im Rahmen der Fahrzeugmontage wird die mit Teilen des Heckfensterrollos 13 bestückte Heckscheibe 9 in bekannter Weise in die Fensteröffnung eingesetzt. Dazu wird, wie Figur 3 erkennen läßt, die Heckscheibe 9 mit dem jenseits der Führungsschienen 19, 21 liegenden Randbereich und einem Fenstergummi 62 in einem Fensterfalz 63 eines Karosserieblechs 64 in bekannter Weise aufgeklebt. In derselben Weise erfolgt die Verklebung auch neben dem unteren und dem oberen Scheibenrand 15 und 16. Sobald die Heckscheibe 9 eingeklebt ist, werden die Führungsrohe 54, 55 an der Antriebseinrichtung 45 angeschlossen, deren Getriebemotor beispielsweise getrennt von der Heckscheibe 9 an einer anderen Stelle innerhalb der Karosserie 5 verankert ist.

Die Funktionsweise des beschriebenen Heckfensterrollos ist wie folgt:

In der Ruhestellung ist unter der Wirkung des Federmotors 34 die Wickelwelle 23 in eine Stellung gedreht, in der die Rollobahn 35 aufgewickelt ist. In dieser Stellung befindet sich die schlauchartige Schlaufe 36 in dem Auslaufschlitz 12. Die Führungsstücke 37, 38 liegen in der Nähe der unteren Enden der beiden Führungsschienen 19, 21, ohne dass jedoch die Führungsglieder 41 aus den zugehörigen Führungsnuten 26 freigekommen sind.

Gleichzeitig sind die beiden Schubglieder 56 und 57 mit ihren beiden Enden von den betreffenden Führungsgliedern 41 beabstandet.

Wenn der Benutzer ausgehend von dieser Stellung des Heckfensterrollos 13, in der der Lichteintritt in das Fahrzeuginnere überhaupt nicht beeinflusst wird, eine Abschattungswirkung erzeugen möchte, fährt er die Rollobahn 35 aus. Die Rollobahn 35 vermindert den Lichtdurchtritt ohne ihn vollständig zu unterbinden. Hierzu besteht die Rollobahn 35 beispielsweise aus einem offnen Kettengewirk oder einer gelochten und schwarz eingefärbten Kunststofffolie.

Um die Rollobahn 35 auszufahren, wird der Getriebemotor 46 mit einer solchen Drehrichtung in Gang gesetzt, dass er das Schubglied 57 nach rechts durch in die Führungsnut 19 bewegt. Da die beiden Schubglieder 56 und 57 an diametral gegenüberliegenden Seiten mit dem Ausgangszahnrad 53 kämmen, wird gleichzeitig das Schubglied 56 nach links durch die Führungsnut 26 der linken Führungsschiene 19 vorgeschoben. Nach einem kurzen Stück des Vorschubwegs kommen die freien Enden der beiden Schubglieder 56 und 57 mit den unteren Enden der Führungsglieder 41 der beiden Führungsstücke 37, 38 in Eingriff und schieben im weiteren Verlauf die Führungsstücke 37, 38 in Richtung auf das obere Ende der beiden Führungsschienen 19, 21.

Da sich der Abstand zwischen den Führungsschienen verändert, tauchen gleichzeitig teleskopartig die Arme 39 der Führungsstücke 37, 38 in das in der betreffenden Schlaufe 36 enthaltene formsteife Rohr des Zugstabs ein.

Sobald die Endlage erreicht ist, wird der Getriebemotor 46 stillgesetzt. Die ausgefahrene Endlage ist in Fiq. 5 gezeigt.

Der Getriebemotor 46 ist selbsthaltend und arretiert die Schubglieder 56 und 57 in der jeweils erreichten Stellung.

Das Abschalten des Getriebemotors 46 erfolgt mit Hilfe von Endschaltern oder indem die Führungsglieder 38 und 39 an Anschläge anlaufen, so dass ein in einer Elektronik auszuwertender Blockierstrom auftritt, der zum Abschalten führt.

Die Rollobahn 35 wird nunmehr zwischen dem Zugstab und der Wickelwelle 32 aufgespannt gehalten.

Zum Einfahren wird der Getriebemotor 46 mit der entgegengesetzten Drehrichtung in Gang gesetzt, so dass die beiden Schubglieder 56 und 57 nach unten aus den zugehörigen Führungsschienen 19, 21 heraus bewegt werden. Gleichzeitig läuft der Zugstab mit nach unten, weil durch die Wirkung des Federmotors 33 der Wickelwelle 32 die Rollobahn 35 ständig unter Spannung gehalten wird.

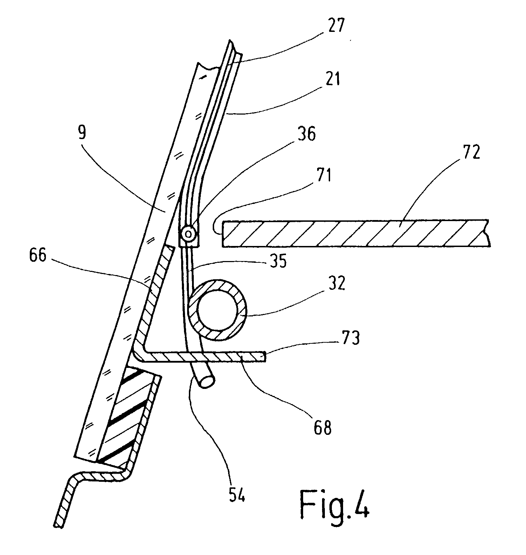

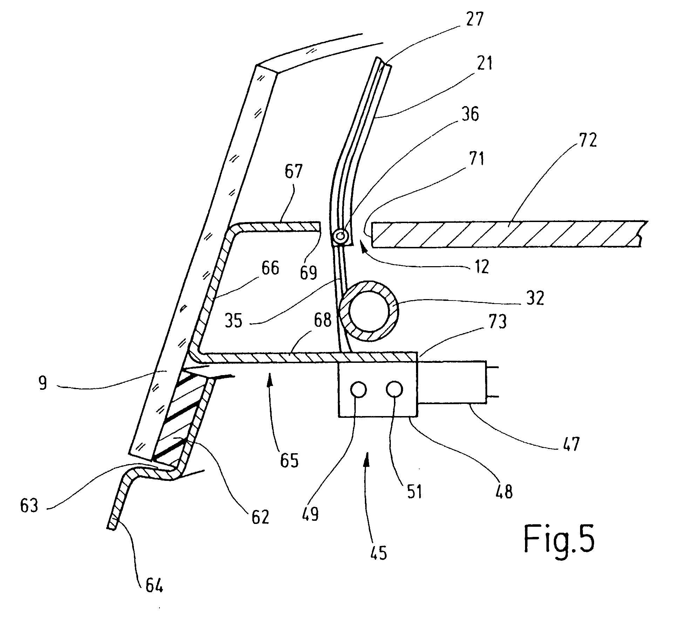

Die in Figur 2 gezeigte Lösung eignet sich nur für Heckscheiben 9 die ausschließlich Krümmungsachsen aufweist, die parallel zur Längsachse der Wickelwelle 32 liegen. Nur bei solchen Heckscheiben 9 läßt sich die Wickelwelle 32 hinreichend dicht an die Innenseite der Heckscheibe 9 heranrücken, so dass der Auslaufschlitz 12 einerseits durch die Hutablage 11 und andererseits durch die Innenseite der Heckscheibe 9 begrenzt wird. Bei Heckscheiben 9 die stärker bombiert sind, kommt eine Lösung in Frage, wie sie in den Figuren 4 und 5 schematisiert gezeigt ist.

Dabei zeigen die Figuren 4 und 5 Schnittdarstellungen senkrecht zu der Achse der Wickelwelle 32 und zwar liegt ein Schnitt nach Fig.4 in der Nähe eines Endes der Wickelwelle, während der andere Schnitt nach Fig. 5 näher zur Mitte der Wickelwelle 32 vorgenommen ist.

Soweit in diesen Figuren Bauteile auftauchen, die bereits zuvor beschrieben sind, werden hierfür dieselben Bezugszeichen verwendet, ohne dass eine erneute Erläuterung gegeben wird.

Der wesentliche Unterschied zu dem vorherigen Ausführungsbeispiel besteht in einer Konsole 65, die knapp oberhalb des unteren Scheibenrandes 16 aufgeklebt ist. Die Konsole 65 hat ein im wesentlichen U-förmiges Querschnittsprofil und setzt sich aus einem Rückenteil 66 sowie zwei etwa parallel zueinander verlaufenden Schenkeln 67 und 68 zusammen.

Der Schenkel 67 bildet eine gerade Kante 69, die im montierten Zustand in einem konstanten Abstand zu einer Kante 71 einer Platte 72 verläuft, die im Fahrzeug angebracht ist. Die Oberseite der Platte 72 und die Oberseite des Schenkels 67 bilden zusammen die Hutablage 11, während die Ränder 69 und 71 die Ränder des Auslaufschlitzes 12 sind.

Da die Scheibe bombiert ist, also auch bezüglich einer Vertikalachse gekrümmt ist, ändert sich die Tiefe des Schenkels 67 vom Rand der Heckscheibe 9 bis zu deren Mitte. Zum Rand hin ist der Schenkel 67 praktisch vollständig verschwunden, wie dies Figur 4 erkennen läßt. Der Rückenteil 66 folgt hingegen dem Verlauf der Heckscheibe 9 in dem Streifen, den er auf der Innenseite der Heckscheibe 9 bedeckt.

Der untere Schenkel 68 läuft ebenfalls an seiner vom dem Rückenteil 66 ablaufendem Kante 73 gerade durch. Dementsprechend kragt der Schenkel 68 im Mittenbereich weiter aus, als im Randbereich, was der Vergleich der Figuren 4 und 5 unschwer erkennen läßt. Der untere Schenkel 68 bildet eine Auflage, auf dem die nicht veranschaulichten Lagerböcke 29 und 31 befestigt sind. An seiner Unterseite ist die Antriebseinrichtung 45 mit dem Getriebegehäuse 48 und dem Antriebsmotor 47 befestigt. Die Führungskanäle 49 und 51 sind auf den Betrachter zu gerichtet.

Damit das Rollo sauber in die Führungsschiene 19 und 21 einläuft, sind diese, wie Figur 4 erkennen läßt, im untersten Abschnitt nicht mit der Innenseite der Heckscheibe 9 verklebt, sondern zeigen von hier aus in den Auslaufschlitz 12 und zwar so, dass ihre Verlängerung tangential zu der Wickelwelle 32, beziehungsweise dem darauf entstandenen Ballen aus der Rollobahn 35 verläuft. Die Führungsrohre 54 beziehungsweise 55 laufen unterhalb des Schenkels 68 zu dem Getriebegehäuse 48.

Die Befestigung der Heckscheibe 9 geschieht bei den Ausführungsbeispielen nach den Figuren 4 und 5 auch im unteren Bereich, wie dies bereits im Zusammenhang mit Fig. 3 erläutert ist unter Zuhilfenahme eines Fenstergummis 62 in einen Fensterfalz 63, der in dem Blechkleid 64 der Karosserie ausgebildet ist.

Um sowohl den Fenstergummi 62 als auch die Konsole 65 nach außen hin unsichtbar zu machen, ist die Heckscheibe 9 beginnend bei der unteren Scheibenkante 16 bis etwas oberhalb des Schenkels 67 in bekannter Weise mit schwarzen Punkten unterschiedlicher Größe bedruckt.

Bei der Ausführungsform nach den Figuren 4 und 5 sind nicht nur die Führungsschienen 19 und 21 und die Wickelwelle 32 herstellerseits mit der Heckscheibe 9 verbunden, sonder auch die komplette Antriebseinrichtung 45 und ein Teil der Hutablage 11, und zwar jener Teil der Hutablage 11, der zwischen der Hutablage 11 der zwischen der Innenseite der Heckscheibe 9 und dem Auslaufschutz 12 liegt.

Am Montageband des Fahrzeugs wird die so vorgefertigte Fensteranordnung 14 einfach in den Fensterfalz eingeklebt. Eine nachträgliche Montage von irgendwelchen Teilen des Fensterrollos 13 ist nicht erforderlich.

Bei einer Fensteranordnung für ein Kraftfahrzeug ist auf der Innenseite der Fensterscheibe ein Fensterrollo vormontiert. Das Fensterrollo ist entweder vollständig oder in wesentlichen Teilen vormontiert, so dass die Montage des Fahrzeugs am Band wesentlich vereinfacht ist.

## Patentansprüche

1. Fensteranordnung (14) für ein Fenster eines Kraftfahrzeugs,
mit einer Fensterscheibe (9), die eine Innenseite aufweist, die im montierten Zustand dem Innenraum des Kraftfahrzeugs zugekehrt ist,
mit einem Fensterrollo (13), zu dem gehören:
- eine Wickelwelle (32), die in Lagermitteln (29,31) drehbar gelagert ist,
- wenigstens eine Rollobahn (35), die mit einer Kante an der Wickelwelle (32) befestigt ist,
- wenigsten ein Paar von Führungsschienen (19,21), von denen sich jede seitlich neben der aufgespannten Rollobahn (35) erstreckt und die jeweils wenigstens eine Führungsnut (26) enthalten,
- ein Zugstab (37,38), der mit einer von der Wickelwelle (32) abliegenden Kante der Rollobahn (35) verbunden ist und der endseitig in den Führungsnuten (26) geführt ist, und
- eine Antriebseinrichtung (45) zum Bewegen des Zugstabs (37,38) längs der Führungsschienen (19,21) und zum Drehen der Wickelwelle (32),
wobei an der Innenseite der Fensterscheibe (9) eine Konsole (65) befestigt ist, die zum Fahrzeuginneren eine gerade zu der Wickelwelle (32) parallele Kante (69) bildet, deren Oberseite im montierten Zustand der Fensterscheibe (9) einen Teil einer Hutablage (11) bildet und die die Lagermittel (29,31) der Wickelwelle (32) trägt.

2. Fensteranordnung nach Anspruch 1, **dadurch gekennzeichnet, dass** die Führungsschienen (19,21) an der Innenseite der Fensterscheibe (9) befestigt sind.

3. Fensteranordnung nach Anspruch 1, **dadurch gekennzeichnet, dass** die Führungsschienen (19,21) jeweils eine Fläche (24) aufweisen, mit der sie an der Innenseite der Fensterscheibe (9) zu befestigen sind.

4. Fensteranordnung nach Anspruch 2, **dadurch gekennzeichnet, dass** die Verbindung der Führungsschienen (19,21) mit der Fensterscheibe (9) eine stoffschlüssige Verbindung ist.

5. Fensteranordnung nach Ansprüchen 1, **dadurch gekennzeichnet, dass** an der Konsole (65) ein Getriebemotor (46) befestigt ist, der zu einer Antriebseinrichtung (45) gehört.

6. Fensteranordnung nach den Anspruch 1, **dadurch gekennzeichnet, dass** die Scheibe (9) an der Außenseite mit einer Bedruckung versehen ist, um die Führungsschienen (19,21) und/oder die Lagermittel (29,31) der Wickelwelle (32) gegen Sicht von Außen abzudecken.

7. Fensteranordnung nach den Anspruch 1, **dadurch gekennzeichnet, dass** die Führungsnuten (26) hinterschnittene Führungsnuten sind.

8. Fensteranordnung nach den Anspruch 1, **dadurch gekennzeichnet, dass** der Wickelwelle (32) ein Federmotor (33) zugeordnet ist, der die Wickelwelle (32) im Aufwickelsinn vorspannt.

9. Fensteranordnung nach den Anspruch 1, **dadurch gekennzeichnet, dass** die Antriebseinrichtung (45) zum Bewegen des Zugstabs zwei Antriebsglieder (56,57) umfasst.

10. Fensteranordnung nach Anspruch 9, **dadurch gekennzeichnet, dass** die Antriebsglieder (56,57) biegsame linienförmige Schubglieder sind, die knicksicher zwischen dem Getriebemotor (46) und der betreffenden Führungsnut (26) geführt sind.

11. Fensteranordnung nach Anspruch 9, **dadurch gekennzeichnet, dass** die Antriebsglieder (56,57) angenähert zylindrische Gebilde sind, die mit einer Verzahnung (59) auf der Außenseite versehen sind, die über die Länge mit konstanter Teilung durchläuft.

12. Fensteranordnung nach Anspruch 11, **dadurch gekennzeichnet, dass** die Verzahnung (59) von einer auf der Außenseite schraubenförmig verlaufenden Rippe gebildet ist.

13. Fensteranordnung nach den Ansprüchen 5 und 9, **dadurch gekennzeichnet, dass** die Antriebsglieder (56,57) mit dem Getriebemotor (46) formschlüssig zusammenwirken.

14. Fensteranordnung nach den Anspruch 1, **dadurch gekennzeichnet, dass** die Rollobahn (35) aus einem Gewirk oder einer gelochten Folie besteht.

15. Fensteranordnung nach den Anspruch 1, **dadurch gekennzeichnet, dass** der Zugstab (37,38) längenveränderlich ist, derart, dass er in der Lage ist, dem sich ändernden Abstand der Führungsnuten (26) zu folgen.

## Claims

1. Window arrangement (14) for a window of a motor vehicle,
with a window pane (9), which has an inner side, which in mounted state faces the interior of the motor vehicle,
with a window roller blind (13), which includes:
• a winding shaft (32), which is rotatably disposed in bearing means (29, 31),
• at least one blind (35), which is fastened at one edge to the winding shaft (32),
• at least one pair of guide rails (19, 21), each of which extends laterally beside the opened out blind (35) and which respectively contain at least one guide groove (26),
• a pull rod (37, 38), which is connected to an edge of the blind (35) remote from the winding shaft (32) and which is guided at its ends in the guide grooves (26),
• a drive means (45) to move the pull rod (37, 38) along the guide rails (19, 21) and to rotate the winding shaft (32),
on the inner side of the window pane (9) a bracket (65) is fastened, which forms a straight edge (69) towards the interior of the motor vehicle, which is parallel to the winding shaft (32), its upper side forming a part of a parcel shelf (11) when the window pane (9) is in mounted state, said straight edge carrying the bearing means (29, 31) of the winding shaft (32).

2. Window arrangement according to Claim 1, **characterised in that** the guide rails (19, 21) are fastened to the inner side of the window pane (9).

3. Window arrangement according to Claim 1, **characterised in that** the guide rails (19, 21) respectively have a face (24), at which they are to be fastened to the inner side of the window pane (9).

4. Window arrangement according to Claim 2, **characterised in that** the connection of the guide rails (19, 21) to the window pane (9) is an integral connection.

5. Window arrangement according to Claim 1, **characterised in that** a geared motor (46) belonging to a drive means (45) is fastened to the bracket (65).

6. Window arrangement according to Claim 1, **characterised in that** the window pane (9) is provided with an imprint on the outside in order to conceal the guide rails (19, 21) and/or the bearing means (29, 31) of the window shaft (32) from view from the outside.

7. Window arrangement according to Claim 1, **characterised in that** the guide grooves (26) are undercut guide grooves.

8. Window arrangement according to Claim 1, **characterised in that** associated with the winding shaft (32) is a spring motor (33), which prestresses the winding shaft (32) in the wind-up direction.

9. Window arrangement according to Claim 1, **characterised in that** the drive means (45) comprises two drive members (56, 57) to move the pull rod.

10. Window arrangement according to Claim 9, **characterised in that** the drive members (56, 57) are pliant linear pushing members, which are directed in a manner secured against flexing between the geared motor (46) and the respective guide groove (26).

11. Window arrangement according to Claim 9, **characterised in that** the drive members (56, 57) are virtually cylindrical structures, which are provided with a toothed arrangement (59) on the outside, which extends over the length with a constant spacing.

12. Window arrangement according to Claim 11, **characterised in that** the toothed arrangement (59) is formed by a rib running helically on the outside.

13. Window arrangement according to claim 5 and 9, **characterised in that** the drive members (56, 57) cooperate positively with the geared motor (46).

14. Window arrangement according to Claim 1, **characterised in that** the blind (35) is made from a woven material or a perforated foil.

15. Window arrangement according to Claim 1, **characterised in that** the pull rod (37, 38) is adjustable in length such that it is able to follow the varying distance between the guide grooves (26).

## Revendications

1. Système de fenêtre (14) pour une fenêtre de véhicule automobile, comprenant une vitre (9) avec une face intérieure qui, à l'état monté, est tournée vers habitacle du véhicule; un store à enrouleur (13) de fenêtre qui comporte un axe d'enroulement (32) monté avec possibilité de rotation dans des moyens formant paliers (29, 31), au moins une bande de store (35) dont un bord est fixé à l'axe d'enroulement (32), au moins une paire de rails de guidage (19, 21) qui s'étendent chacun sur le côté de la bande de store (35) déployée et comportent chacun au moins une rainure de guidage (26), une barre de traction (37, 38) qui est liée à un bord de la bande de store (35) éloigné de l'axe d'enroulement (32) et est guidée avec ses extrémités dans les rainures de guidage (26), et un dispositif d'entraînement (45) pour déplacer la barre de traction (37, 38) le long des rails de guidage (19, 21) et mettre en rotation l'axe d'enroulement (32); une console (65) étant fixée à la face intérieure de la vitre (9), qui comporte, côté habitacle du véhicule, un rebord (69) rectiligne qui est parallèle à l'axe d'enroulement (32) et dont la face supérieure, à l'état monté de la vitre (9), fait partie d'une plage arrière (11) et porte les moyens formant paliers (29, 31) de l'axe d'enroulement (32).

2. Système de fenêtre selon la revendication 1, **caractérisé par le fait que** les rails de guidage (19, 21) sont fixés à la face intérieure de la vitre (9).

3. Système de fenêtre selon la revendication 1, **caractérisé par le fait que** les rails de guidage (19, 21) présentent chacun une surface (24) avec laquelle ils sont fixés à la face intérieure de la vitre (9).

4. Système de fenêtre selon la revendication 2, **caractérisé par le fait que** la liaison des rails de guidage (19, 21) avec la vitre (9) est une liaison par matière.

5. Système de fenêtre selon la revendication 1, **caractérisé par le fait qu'**un moto-réducteur (46), qui fait partie d'un dispositif d'entraînement (45), est fixé à la console (65).

6. Système de fenêtre selon la revendication 1, **caractérisé par le fait que** la vitre (9) est pourvue, sur sa face extérieure, d'une impression destinée à masquer les rails de guidage (19, 21) et/ou les moyens formant paliers (29, 31) de l'axe d'enroulement (32) vis-à-vis de l'extérieur.

7. Système de fenêtre selon la revendication 1, **caractérisé par le fait que** les rainures de guidage (26) sont des rainures en contre-dépouille.

8. Système de fenêtre selon la revendication 1, **caractérisé par le fait qu'**un moteur à ressort (33) est associé à l'axe d'enroulement (32) et qu'il met sous précontrainte dans le sens de l'enroulement.

9. Système de fenêtre selon la revendication 1, **caractérisé par le fait que** le dispositif d'entraînement (45) pour déplacer la barre de traction comprend deux éléments d'entraînement (56, 57).

10. Système de fenêtre selon la revendication 9, **caractérisé par le fait que** les éléments d'entraînement (56, 57) sont des organes de poussée linéaires souples qui sont guidés entre le moto-réducteur (46) et la rainure de guidage (26) respective, en étant protégés contre la flexion.

11. Système de fenêtre selon la revendication 9, **caractérisé par le fait que** les éléments d'entraînement (56, 57) sont des structures sensiblement cylindriques qui sont pourvues, sur leur face extérieure, d'une denture (59) présentant un pas constant sur toute sa longueur.

12. Système de fenêtre selon la revendication 11, **caractérisé par le fait que** la denture (59) est constituée par une nervure s'étendant en forme d'hélice sur la face extérieure.

13. Système de fenêtre selon les revendications 5 et 9, **caractérisé par le fait que** les éléments d'entraînement (56, 57) coopèrent par complémentarité de formes avec le moto-réducteur (46).

14. Système de fenêtre selon la revendication 1, **caractérisé par le fait que** la bande de store (35) est formée d'un produit à mailles ou d'une feuille perforée.

15. Système de fenêtre selon la revendication 1, **caractérisé par le fait que** la barre de traction (37, 38) peut modifier sa longueur, de manière à pouvoir s'adapter à l'écartement variable des rainures de guidage (26).
